# EUROPÄISCHE PATENTSCHRIFT

(11) **EP 2 939 086 B1**
(45) Veröffentlichungstag und Bekanntmachung des Hinweises auf die Patenterteilung: **03.07.2019**
(21) Anmeldenummer: 13802924.4
(22) Anmeldetag: 03.12.2013
(51) Int. Cl.: G06F 3/023, G06F 3/0488

(54) **VERFAHREN ZUM EINGEBEN UND ERKENNEN EINER ZEICHENKETTE**
METHOD FOR INPUTTING AND IDENTIFYING A CHARACTER STRING
PROCÉDÉ D'ENTRÉE ET D'IDENTIFICATION D'UNE CHAÎNE DE CARACTÈRES

(30) Priorität: 28.12.2012 DE 102012025370; 04.06.2013 DE 102013009375
(43) Veröffentlichungstag der Anmeldung: 04.11.2015
(73) Patentinhaber: Volkswagen Aktiengesellschaft, 38440 Wolfsburg (DE)
(72) Erfinder: CZELNIK, Mark Peter, 38440 Wolfsburg (DE); BENDEWALD, Lennart, 38442 Wolfsburg (DE); WÄLLER, Christoph, 38196 Braunschweig (DE)
(86) Internationale Anmeldenummer: PCT/EP2013/075364
(87) Internationale Veröffentlichungsnummer: WO 2014/102041

(56) Entgegenhaltungen:
- WO-A1-2008/085736
- US-A1- 2005 234 722
- US-A1- 2010 036 655
- US-A1- 2011 202 493

## Beschreibung

Die vorliegende Erfindung betrifft ein Verfahren zum Eingeben und Erkennen einer Zeichenkette. Ferner betrifft die Erfindung eine Vorrichtung zum Eingeben und Erkennen einer Zeichenkette.

Der Vergleich von Nutzereingaben mit in einer Datenbank gespeicherten Datenbankeinträgen ist aus dem technischen Gebiet der Suchmaschinen bekannt. Dabei wird eine Nutzereingabe mit Datenbankeinträgen verglichen und die Relevanz eines jeden Datenbankeintrags mittels eines Algorithmus berechnet und ein dazugehöriges Konfidenzmaß ausgegeben, das die Relevanz quantifiziert. Falls das Suchergebnis eindeutig ist, wird der entsprechende Datenbankeintrag ausgegeben oder auf seiner Basis eine Funktion ausgeführt. Ist das Suchergebnis nicht eindeutig, so wird dabei entweder typischerweise eine Trefferliste oder eine systemseitige Rückfrage ausgegeben.

Solche Vergleiche werden insbesondere dann eingesetzt, wenn angenommen wird, dass erfasste Daten entweder durch unvollständige oder mehrdeutige Eingaben seitens des Nutzers oder durch systemseitig ungenaues Erfassen fehlerhaft sind, wie dies beispielsweise bei Spracheingaben in lauter Umgebung oder bei manuellen Eingaben in einer durch Vibrationen gestörten Umgebung der Fall ist. Daher kommen solche interaktiven Nutzerschnittstellen zunehmend in Fahrzeugen zum Einsatz, um den Nutzungskomfort der zahlreichen Funktionseinrichtungen, wie beispielsweise einem Navigationssystem, Telekommunikationseinrichtungen oder Infotainmenteinrichtungen, zu verbessern.

Weiterhin muss in einem Fahrzeug berücksichtigt werden, dass der Fahrer bei einem Bedienvorgang über die Nutzerschnittstelle nicht vom Straßenverkehr abgelenkt wird. Daher wurde vorgeschlagen, eine multimodale Nutzereingabe zu ermöglichen, wobei unter den möglichen Eingabemodalitäten auf die jeweils für den Nutzer günstigste gewechselt werden kann. Zu den gängigen Eingabemodalitäten zählen insbesondere Eingaben über Sprache, Tastatur, Touchscreens und berührungslose Gesten. Die DE 10 2008 008 948 A1 beschreibt beispielsweise ein solches Verfahren, bei dem während einer mehrteiligen Nutzereingabe auch während der Eingabe zwischen zwei Eingabemodalitäten gewechselt werden kann.

Die US 2009/0077464 A1 beschreibt ein Verfahren, bei dem ein Wort aus einer Kandidatenliste durch Berühren ausgewählt werden kann.

Weiterhin beschreibt die US 2011/0202876 A1 ein Verfahren, bei dem anhand von Nutzereingaben eine Eingabe-Historie erstellt wird. Die erste Nutzereingabe wird dann verwendet, um vom Nutzer häufig eingegebene Texte zur Auswahl auszugeben.

Die WO 2001/113057 A1 ein Verfahren zum Eingeben von Text. Dabei werden Vorschläge zu den Nutzereingaben ausgegeben.

Die US2005234722 beschreibt einen hybrider Ansatz zur Verbesserung der Handschrifterkennung und Spracherkennung in Datenverarbeitungssystemen offenbart. In einer Ausführungsform wird ein Frontend verwendet, um Striche, Zeichen und / oder Phoneme zu erkennen. Das Frontend gibt Kandidaten mit relativen oder absoluten Übereinstimmungswahrscheinlichkeiten an die Eingabe zurück. Basierend auf sprachlichen Merkmalen der Sprache, z. alphabetische oder ideographische Sprache für die eingegebenen Wörter, Häufigkeit der verwendeten Wörter und Phrasen, Morphologie der Sprache oder Kontext, in dem das Wort eingegeben wird, kombiniert ein Back-End die vom Front-End ermittelten Kandidaten aus den Eingaben auf Übereinstimmung mit bekannten Wörtern und den Wahrscheinlichkeiten der Verwendung solcher Wörter im aktuellen Kontext.

Die US2011/0202493 beschreibt eine Softwarekomponente, die konfiguriert ist, um eine Benutzerinteraktion mit einem Touchscreen als ein oder mehrere Zeichen zu interpretieren. Mehrdeutige Benutzerinteraktionen können so interpretiert werden, dass sie möglicherweise unterschiedliche Zeichen darstellen. Die Softwarekomponente kann den verschiedenen Interpretationen der Benutzereingaben unterschiedlichen Wahrscheinlichkeiten zuweisen, basierend auf einer Übereinstimmung zwischen der Benutzereingabe und eine idealisierte Darstellung der Zeichen.

Die WO2008085736 beschreibt ein computerimplementiertes Verfahren, dass das Empfangen einers Folge von Eingabezeichen von einer Tastatur einschliesst, wobei die Tastatur einen vorbestimmten Zeichenaufbau hat, wobei jedes Zeichen in der Anordnung ein oder mehrere Nachbarzeichen aufweist. Das Verfahren schließt auch die Erzeugung einer Gruppe an Zeichenketten von zumindest einer Untergruppe der Folge an Eingabezeichen, wobei die Gruppe an Zeichenketten Permutation der entsprechenden Eingabezeichen in der Untergruppe der Folge und Nachbarzeichen der entsprechenden Eingabezeichen auf der Anordnung der Tastatur aufweist; Identifizieren einer oder mehrerer Kandidatenworte in einem Wörterbuch, die eine Zeichenkette in der Gruppe an Zeichenketten als ein Präfix aufweisen; Auswerten der Kandidatenworte; Wahl einer Untergruppe der Kandidatenworte, basierend auf einem vorbestimmten Kriterium; und Anbieten der Untergruppe der Kandidatenworte, ein.

Bei Eingabeerfassungssystemen werden die Eingaben des Nutzers typischerweise mit in einer Datenbank gespeicherten Datenbankeinträgen verglichen. Die Relevanz eines jeden Datenbankeintrags bezüglich der erfassten Eingabe wird dann mittels eines Algorithmus berechnet und es wird ein Erkennungsgrad, z.B. in Form eines Konfidenzmaßes bestimmt, der die Relevanz eines potentiell zur Eingabe passenden Datenbankeintrags quantifiziert. Falls das Suchergebnis eindeutig ist, wird der entsprechende Datenbankeintrag ausgegeben oder auf seiner Basis eine dazugehörige Funktion ausgeführt. Ist das Suchergebnis nicht eindeutig, so wird dabei entweder typischerweise eine Trefferliste oder eine systemseitige Rückfrage ausgegeben. Dabei bilden Nutzereingabe und Systemausgabe ein dialogähnliches Schema, insbesondere wenn eine auf eine Nutzereingabe reagierende Systemausgabe zu einer weiteren Nutzereingabe auffordert.

Als nachteilig hat sich herausgestellt, dass der Nutzer bei einer fehlerhaften Eingabe eine Korrektur seiner Eingabe tätigen muss. Da es in der Regel schwer möglich ist, innerhalb einer Eingabe zu einer beliebigen Stelle zurückzuspringen, um eine bereits getätigte Eingabe zu wiederholen oder abzuändern ist es in der Praxis wünschenswert, wenn dem Nutzer trotz fehlerhafter Eingaben das von ihm gewünschte Ergebnis als Alternative angezeigt wird.

Der vorliegenden Erfindung liegt die Aufgabe zugrunde, ein Verfahren und eine Vorrichtung der eingangs genannten Art bereitzustellen, welche es erlauben, Eingaben in ein System zu tätigen, ohne eine manuelle Korrektur der vom System eventuell als fehlerhaft erkannten Eingaben zu tätigen.

Diese Aufgabe wird erfindungsgemäß durch ein Verfahren mit den Merkmalen des Anspruchs 1 und einer Vorrichtung mit den Merkmalen des Anspruchs 8 gelöst. Vorteilhafte Aus- und Weiterbildungen ergeben sich aus den abhängigen Ansprüchen.

Bei dem erfindungsgemäßen Verfahren werden mehrere nacheinander eingegebene Nutzereingaben zum Bilden einer Zeichenkette erfasst. Weiterhin wird eine Konfidenzanalyse durchgeführt, bei der jede Nutzereingabe mit mehreren in einer Datenbank gespeicherten Zeichen verglichen wird und relevante Zeichen ein Wert eines Konfidenzmaßes zugeordnet wird, der die Übereinstimmung der Nutzereingabe mit diesen relevanten Zeichen bewertet. Aus den den Nutzereingaben zugeordneten Zeichen werden Zeichenkombinationen gebildet, wobei aus den den Zeichen zugeordneten Konfidenzmaßen Gesamtkonfidenzmaße für die Zeichenkombinationen ermittelt werden. Ferner wird eine Teilmenge der Zeichenkombinationen in Abhängigkeit von den Gesamtkonfidenzmaßen ausgegeben. Vorteilhafterweise ist es bei dem erfindungsgemäßen Verfahren nicht notwendig, dass ein Nutzer eine fehlerhafte Eingabe korrigiert.

Als relevante Zeichen werden die Zeichen betrachtet, die eine Ähnlichkeit mit der Nutzereingabe aufweisen. So wird beispielsweise für die Nutzereingabe "H" neben dem Zeichen "H" auch das Zeichen "A" als relevant betrachtet, während das Zeichen "O" als nicht relevant betrachtet wird.

Das Ergebnis der Konfidenzanalyse ist die zentrale Bedingung zur Steuerung des erfindungsgemäßen Verfahrens. Bei der Durchführung einer Konfidenzanalyse wird angenommen, dass systemseitig erfasste Daten z.B. durch unvollständige oder mehrdeutige Eingaben oder durch ungenaues Erfassen fehlerhaft sind, wie dies beispielsweise bei Spracheingaben in lauter Umgebung oder bei manuellen Eingaben in einer durch Vibrationen gestörten Umgebung der Fall ist. Insbesondere kann das Ergebnis der Konfidenzanalyse dabei eindeutig oder weniger eindeutig sein. Im Sinne der Erfindung ist ein ideal eindeutiges Ergebnis der Konfidenzanalyse, wenn genau ein Datenbankeintrag mit einem sehr hohen Konfidenzmaß ermittelt wird. Ein weniger eindeutiges Ergebnis zeichnet sich dadurch aus, dass beispielsweise kein oder aber mehrere Datenbankeinträge mit einem sehr hohen Konfidenzmaß ermittelt werden.

Gemäß einer Ausgestaltung werden nur die Zeichenkombinationen ausgegeben, deren Gesamtkonfidenzmaße oberhalb eines bestimmten Schwellenwertes liegen. Dies ist vorteilhaft, um bei langen Nutzereingaben eine Reduktion der möglichen Zeichenkombinationen zu erreichen. Dies erhöht die Ausführgeschwindigkeit und die Übersichtlichkeit der Ausgabe für den Nutzer.

Insbesondere wird der Schwellenwert in Abhängigkeit von der Anzahl der mehreren Nutzereingaben gewählt. Der Schwellenwert wird also an die Anzahl der Nutzereingaben angepasst. Dies ist vor allen Dingen dann vorteilhaft, wenn sich die Gesamtkonfidenzmaße aufgrund einer bestimmten Rechenoperation stark verkleinern oder vergrößern. Durch die Anpassung des Schwellenwerts wird dann verhindert, dass die Anzahl von ausgegebenen Zeichenkombinationen Null ist.

In einer anderen Ausgestaltung werden die Gesamtkonfidenzmaße der Zeichenkombinationen mittels Multiplikation der den relevanten Zeichen zugeordneten Konfidenzmaße ermittelt. Dies ist besonders vorteilhaft, da dann die Zeichenkombinationen mit einem niedrigen Konfidenzmaß überproportional abgeschwächt werden. Diese Zeichenkombinationen werden also als besonders unwahrscheinlich eingestuft und im Verfahren nicht weiter berücksichtigt. Alternativ können die Gesamtkonfidenzmaße auch mittels Mittelwertbildung über die den relevanten Zeichen zugeordneten Konfidenzmaße ermittelt werden.

Gemäß einer anderen Ausgestaltung wird die Teilmenge der Zeichenkombinationen absteigend nach der Höhe der Gesamtkonfidenzmaße geordnet und die Zeichenkombination mit dem höchsten Gesamtkonfidenzmaß als erstes ausgegeben. Damit wird vorteilhafterweise sichergestellt, dass die Zeichenkombinationen, die am wahrscheinlichsten vom Nutzer eingegeben worden sind, auch als erstes ausgegeben werden.

Insbesondere wird die Teilmenge der Zeichenkombinationen mit Datenbankeinträgen verglichen. Ist dann für die Zeichenkombination mit dem höchsten Konfidenzmaß kein Datenbankeintrag vorhanden, wird diese Zeichenkombination nicht ausgegeben. Es wird dann die Zeichenkombination mit dem nächsthöheren Gesamtkonfidenzmaß, für die ein Datenbankeintrag vorhanden ist, als erstes ausgegeben. Die Datenbankeinträge sind beispielsweise Einträge eines Wörterbuchs. Dadurch wird sichergestellt, dass dem Nutzer nur sinnvolle Zeichenkombinationen ausgegeben werden. Dies reduziert die Anzahl der Zeichenkombinationen. Weiterhin ermöglicht dies eine "Rückwärtskorrektur", ohne dass der Nutzer eine manuelle Korrektur vornehmen muss.

Gemäß einer weiteren Ausgestaltung werden die Nutzereingaben mittels Handschrifterfassung, Spracherfassung oder Tastatureingabeerfassung erfasst.

Die erfindungsgemäße Vorrichtung zum Eingeben und Erkennen einer Zeichenkette umfasst eine Eingabevorrichtung zum Eingeben und Erfassen von Nutzereingaben. Ferner umfasst die Vorrichtung eine Steuervorrichtung zur Durchführung einer Konfidenzanalyse, bei der Vergleiche zwischen Nutzereingaben mit mehreren in einer Datenbank gespeicherten Zeichen durchführbar sind und relevanten Zeichen ein Wert eines Konfidenzmaßes zuordenbar ist, der die Übereinstimmung der Nutzereingabe mit diesen relevanten Zeichen bewertet. Weiterhin ist die Steuervorrichtung dazu ausgebildet, Zeichenkombinationen aus den relevanten Zeichen zu bilden. Mittels einer Rechenvorrichtung sind aus den den Zeichen zugeordneten Konfidenzmaßen Gesamtkonfidenzmaße für die Zeichenkombinationen ermittelbar. Weiterhin umfasst die Vorrichtung eine Ausgabevorrichtung, mittels welcher eine Teilmenge der Zeichenkombinationen in Abhängigkeit von den Gesamtkonfidenzmaßen ausgebbar ist. Die Vorrichtung ist insbesondere dazu ausgebildet, das erfindungsgemäße Verfahren durchzuführen und weist daher alle Vorteile des Verfahrens auf.

Die Erfindung betrifft ferner ein Fahrzeug mit einer solchen Vorrichtung.

Die Erfindung wird nun anhand eines Ausführungsbeispiels mit Bezug zu den Zeichnungen erläutert:
- Figur 1: zeigt schematisch ein Ausführungsbeispiel der erfindungsgemäßen Vorrichtung,
- Figur 2: zeigt ein Flussdiagramm zum Ablauf eines ersten Ausführungsbeispiels des erfindungsgemäßen Verfahrens,
- Figur 3a: zeigt eine Zuordnung von Konfidenzmaßen zu relevanten Zeichen,
- Figur 3b: zeigt Zeichenkombinationen und Gesamtkonfidenzmaße der aus Figur 3a ermittelten relevanten Zeichen,
- Figur 4a: zeigt eine weitere Zuordnung von Konfidenzmaßen zu relevanten Zeichen,
- Figur 4b: zeigt Zeichenkombinationen und Gesamtkonfidenzmaße der aus Figur 4a ermittelten relevanten Zeichen,
- Figur 5: zeigt ein Flussdiagramm zum Ablauf eines zweiten Ausführungsbeispiels des erfindungsgemäßen Verfahrens,
- Figur 6a: zeigt einen Ausschnitt einer Tastatur mit deutscher Tastenanordnung,
- Figuren 6b und 6c: zeigen Zuordnungen der Konfidenzmaße bei Tastenerkennung und
- Figur 7: zeigt die Anordnung der erfindungsgemäßen Vorrichtung in einem Fahrzeug.

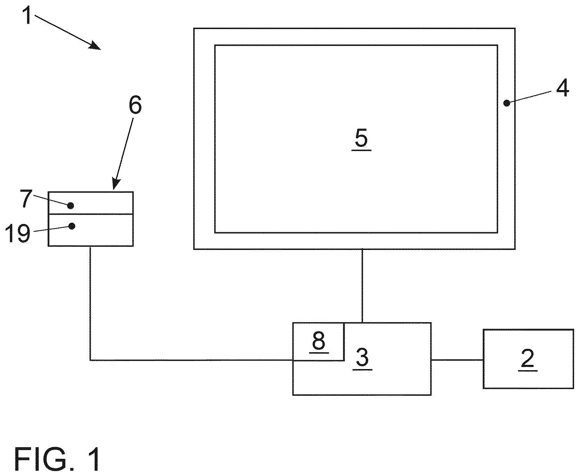

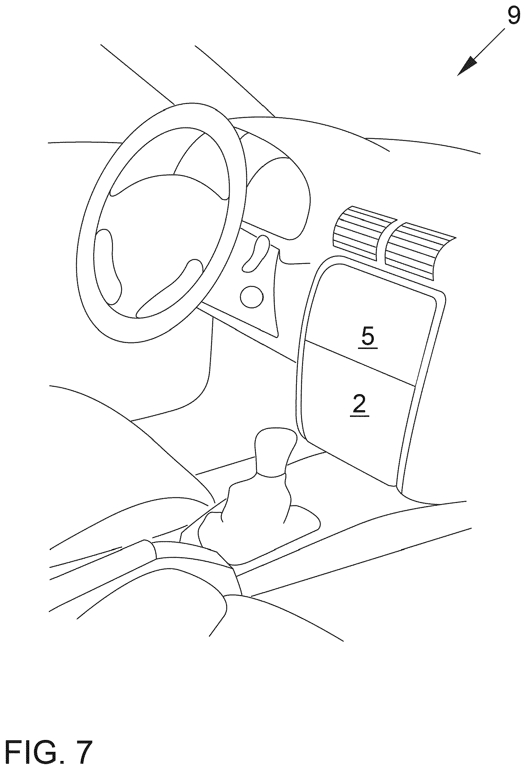

Mit Bezug zu Figur 1 und 7 wird zunächst ein erstes Ausführungsbeispiel der erfindungsgemäßen Vorrichtung 1 sowie eine Anordnung der Vorrichtung 1 in einem Fahrzeug 9 erläutert:
Die Vorrichtung 1 zum Eingeben und Erkennen einer Zeichenkette umfasst eine Eingabevorrichtung 2, die eine berührungsempfindliche Oberfläche umfasst, die eine Nutzereingabe erfassen kann. Dadurch kann die Eingabevorrichtung 2 eine handschriftliche Eingabe seitens des Nutzers erfassen. Alternativ kann ein Feld auf der Eingabevorrichtung 2 als Tastatur ausgebildet sein. Der Nutzer kann also ebenso Eingaben mittels einer Tastatur tätigen. Weiterhin kann die Eingabevorrichtung 2 als Mikrofon ausgebildet sein, mit der Spracheingaben erfasst werden können.

Weiterhin umfasst die Vorrichtung 1 eine Steuervorrichtung 3, die mit der Eingabevorrichtung 2 gekoppelt ist. Die Steuervorrichtung 3 ist ferner mit einer Anzeigevorrichtung 4 gekoppelt, die eine Anzeigefläche 5 umfasst, auf der die Nutzereingaben angezeigt werden. Schließlich umfasst die Vorrichtung 1 eine Datenbank 6, in der Datenbankeinträge 7 und 19 hinterlegt sind. Die Datenbankeinträge umfassen dabei Zeichen 7 und Einträge aus einem Wörterbuch 19. Die Datenbank 6 ist wie die Anzeigevorrichtung 4 und die Eingabevorrichtung 2 mit der Steuervorrichtung 3 gekoppelt. Ferner ist eine Rechenvorrichtung 8 in die Steuervorrichtung 3 integriert. Die Rechenvorrichtung 8 führt Vergleiche der Nutzereingaben mit den Datenbankeinträgen 7 und 19 durch.

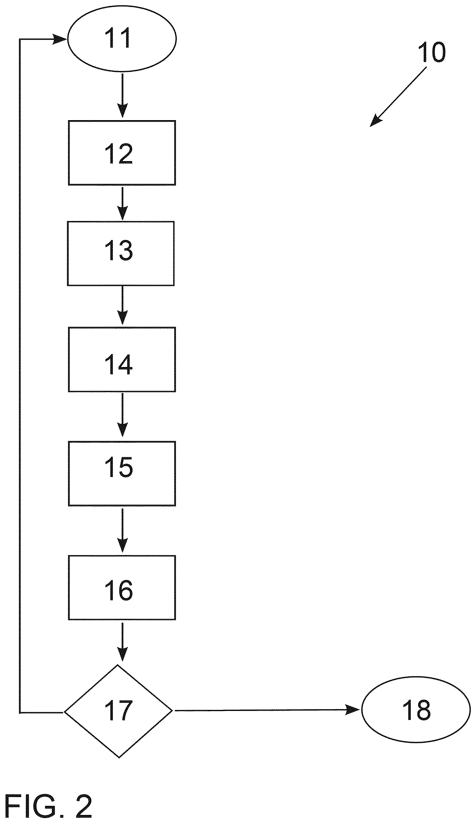

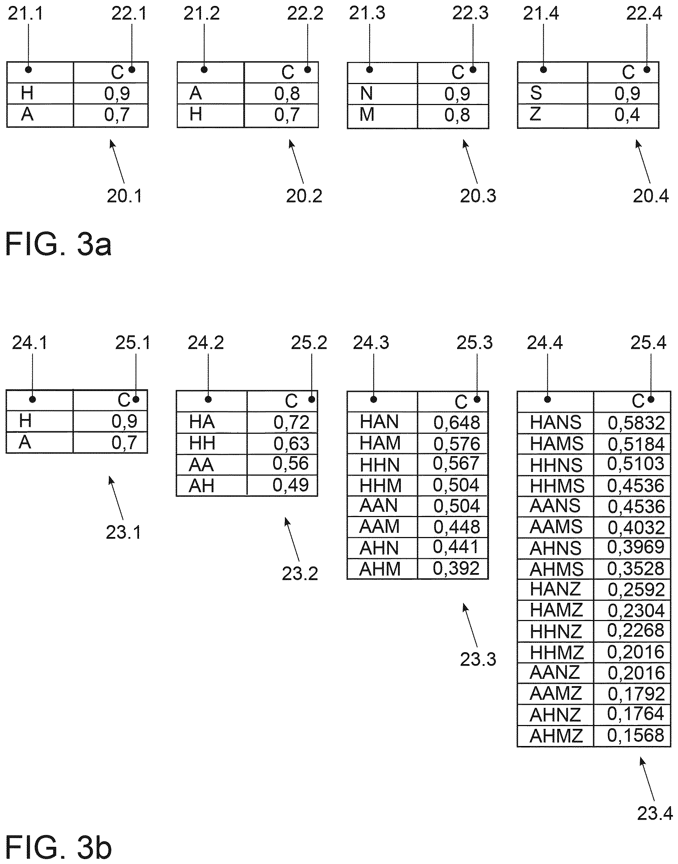

Das Verfahren wird mit Bezug zu den Figuren 2, 3a und 3b erläutert. Als Beispiel einer zu erkennenden Zeichenkette wird der Name "HANS" verwendet. Das Verfahren kann mit der Vorrichtung 1 der Figur 1 ausgeführt werden:
Im Schritt 11 des Verfahrens 10 erfasst die Eingabevorrichtung 2 eine vom Nutzer getätigte Eingabe. Dies ist beispielsweise das Schreiben des Buchstabens "H" auf der berührungsempfindlichen Oberfläche der Eingabevorrichtung 2.

Im Schritt 12 wird eine Konfidenzanalyse für den Buchstaben "H" durchgeführt. In der Konfidenzanalyse wird insbesondere der eingegebene Buchstabe "H" mit den Zeichen 7 in der Datenbank 6 verglichen. Dabei werden Abweichungen der Eingabe "H" von den Zeichen 7 ermittelt und daraus ein Konfidenzmaß 22.1 ermittelt.

In Figur 3a ist eine Trefferliste 20.1 gezeigt. Die Trefferliste 20.1 umfasst zwei Spalten, von denen in der linken Spalte relevante Zeichen 21.1 aufgelistet und in der rechten Spalte die dazugehörigen berechneten Werte des Konfidenzmaßes 22.1 gegenübergestellt sind. Die Zeichen 21.1 sind in absteigender Reihenfolge des zugeordneten Konfidenzmaßes 22.1 sortiert. Das Konfidenzmaß C nimmt im Ausführungsbeispiel Werte zwischen 0 ≤ C ≤ 1 an.

Für das Zeichen "H" wird ein Wert für das Konfidenzmaß 22.1 von 0,9 berechnet. Für das Zeichen "A" wird ein Wert für das Konfidenzmaß 22.1 von 0,8 berechnet. Die Nutzereingabe wird also in diesem Fall am ehesten dem tatsächlich gemeinten Buchstaben "H" zugeordnet.

Im Schritt 13 wird die Nutzereingabe zu einer Historie hinzugefügt.

Im Schritt 14 wird eine Gesamtkonfidenzliste 23.1 erstellt. Dabei werden aus den Werten der Konfidenzmaße 22.1 der relevanten Zeichen 21.1 Gesamtkonfidenzmaße 25.1 für jede Kombination 24.1 der relevanten Zeichen 21.1 berechnet. Da bisher lediglich eine einzige Eingabe durch den Nutzer erfolgt ist, werden die Werte des Konfidenzmaßes 22.1 der relevanten Zeichen 21.1 als Gesamtkonfidenzmaße 25.1 angenommen.

Im Schritt 15 wird ein Schwellenwert des Gesamtkonfidenzmaßes auf beispielsweise C = 0,7 festgesetzt. Die Anzahl der Zeichenkombinationen kann auf diese Art und Weise reduziert werden. Im konkreten Beispiel liegen die Gesamtkonfidenzmaße 25.1 beider Zeichenkombinationen 24.1 oberhalb des Schwellenwerts.

Im Schritt 16 werden die Ergebnisse auf der Anzeigefläche 5 der Vorrichtung 1 zur Auswahl für den Nutzer ausgegeben.

Im Schritt 17 wird ermittelt, ob die Nutzereingabe mit dem Schreiben des Buchstabens "H" beendet ist oder nicht. Dies wird beispielsweise daran erkannt, ob der Nutzer nach Ablauf eines bestimmten Zeitintervalls eine zweite Eingabe tätigt oder nicht. Dieses Zeitintervall kann beispielsweise zwischen 0,5 s und 2 s liegen. Erfolgt keine weitere Eingabe innerhalb dieses Zeitintervalls, wird mit Schritt 18 fortgefahren. Erfolgt eine zweite Nutzereingabe innerhalb des bestimmten Zeitintervalls, so wird mit Schritt 11 das Verfahren von vorne begonnen.

Der Nutzer schreibt nun innerhalb des vorher bestimmten Zeitintervalls ein "A" auf die Eingabevorrichtung 2. Für den Buchstaben "A" werden die Schritte 12 und 13 des Verfahrens 10 wiederholt. Es wird also wiederum eine Trefferliste 20.2 ermittelt. In der Trefferliste 20.2 sind in der linken Spalte relevante Zeichen 21.2 aufgelistet und in der rechten Spalte werden die dazugehörigen berechneten Werte des Konfidenzmaßes 22.2 bereitgestellt. Für das Zeichen "A" wird ein Wert für das Konfidenzmaß von 0,8 und für das Zeichen "H" wird ein Wert für das Konfidenzmaß von 0,7 berechnet. Es wird also der tatsächlich gemeinte Buchstabe "A" dem höchsten Konfidenzmaß zugeordnet.

Im Schritt 14 wird aus den Werten der Konfidenzmaße 22.1 und 22.2 ein Wert für ein Gesamtkonfidenzmaß 25.2 berechnet. Dabei werden die relevanten Zeichen 21.1 und 21.2 miteinander kombiniert. Dies ist in Figur 3b gezeigt. Für die Buchstaben "H" und "A", für die jeweils zwei relevante Zeichen ermittelt wurden, existieren also vier mögliche Zeichenkombinationen 24.2. Das Gesamtkonfidenzmaß 25.2 wird bevorzugt über Multiplikation der Einzelkonfidenzmaße 22.1 und 22.2 berechnet. Dies hat den Vorteil, dass allgemein Zeichenkombinationen, die Zeichen mit einer niedrigen Konfidenz beinhalten, überproportional abgeschwächt werden. Alternativ kann das Gesamtkonfidenzmaß auch über eine Mittelwertbildung der Einzelkonfidenzmaße gebildet werden. Dies ist dann sinnvoll, wenn eine Abschwächung von Zeichenkombinationen mit niedrigen Gesamtkonfidenzmaßen nicht erwünscht ist.

Im Schritt 15 wird ein Schwellenwert des Gesamtkonfidenzmaßes auf beispielsweise C = 0,6 festgesetzt. Die Anzahl der relevanten Zeichenkombinationen wird auf diese Art und Weise reduziert. Da allgemein die Werte der Gesamtkonfidenzmaße aufgrund der Multiplikation der Einzelkonfidenzmaße der relevanten Zeichen bei steigender Anzahl von Nutzereingaben immer niedriger werden, ist es vorteilhaft, den Schwellenwert an die Anzahl der Nutzereingaben anzupassen. Wird der Schwellenwert nämlich im ersten Durchlauf des Verfahrens, wenn lediglich eine erste Nutzereingabe getätigt worden ist zu hoch gewählt, so wird bei einer Nicht-Anpassung des Schwellenwerts mit steigender Anzahl von Nutzereingaben die Anzahl der Zeichenkombinationen die letztendlich ausgegeben werden auf Null reduziert.

Im Schritt 16 werden die Zeichenkombinationen, die ein Gesamtkonfidenzmaß oberhalb des Schwellenwerts aufweisen, auf der Anzeigefläche 5 der Vorrichtung 1 zur Auswahl für den Nutzer ausgegeben. Im konkreten Beispiel der Figur 3b würden also die Zeichenkombinationen 23.2 "HA" und "HH" auf der Anzeigefläche 5 dargestellt werden.

Im Schritt 17 wird wiederum ermittelt, ob die Eingabe beendet ist. Da der Nutzer nun die Eingaben "N" tätigt, beginnt das Verfahren wiederum bei Schritt 11. Es werden analog zu den Eingaben "H" und "A" die Schritte 12 und 13 des Verfahrens ausgeführt.

Im Schritt 14 werden nun anhand der Werte der Konfidenzmaße 22.1, 22.2 und 22.3 der drei Eingaben Gesamtkonfidenzmaße 25.3 der Zeichenkombinationen 24.3 der drei Eingaben berechnet. Werden für alle drei Eingaben jeweils zwei relevante Zeichen 21.1, 21.2 und 21.3 ermittelt, so ergeben sich insgesamt acht mögliche Zeichenkombinationen 24.3.

Der Schwellenwert des Gesamtkonfidenzmaßes wird in Schritt 15 auf einen niedrigeren Wert festgelegt, beispielsweise C = 0,5.

Es werden dann im Schritt 16 wieder alle Zeichenkombinationen 24.3 mit einem Gesamtkonfidenzmaß 25.3 oberhalb des festgelegten Schwellenwertes auf der Anzeigefläche 5 dargestellt. Im konkreten Beispiel der Figur 3b werden also die Zeichenkombinationen "HAN", "HAM", "HHN", "HHM" und "AAN" auf der Anzeigefläche 5 dargestellt.

Im Schritt 17 wird nun wiederum erkannt, dass der Nutzer eine vierte Eingabe getätigt hat, nämlich die Eingabe "S". Es werden analog zu den Eingaben "H", "A" und "N" die Schritte 11, 12 und 13 des Verfahrens ausgeführt.

Im Schritt 14 werden nun anhand der Werte der Konfidenzmaße 21.1 bis 21.4 der vier Eingaben Gesamtkonfidenzmaße 25.4 der Zeichenkombinationen 24.4 der vier Eingaben berechnet. Werden für alle vier Eingaben jeweils zwei relevante Zeichen 21.1 bis 21.4 ermittelt, so ergeben sich insgesamt sechzehn mögliche Zeichenkombinationen 24.4.

Im Schritt 15 wird der Schwellenwert des Konfidenzmaßes auf C = 0,4 festgelegt. Im Schritt 16 werden dann die Zeichenkombinationen "HANS", "HAMS", "HHNS", "HHMS", "AANS" und "AAMS" untereinander auf der Anzeigefläche 5 zur Auswahl für den Nutzer dargestellt. Dabei sind die Zeichenkombinationen 24.4 absteigend nach der Höhe des Gesamtkonfidenzmaßes 25.4 geordnet. Alternativ kann die Zeichenkombination mit dem höchsten Gesamtkonfidenzmaß 25.4 automatisch in den geschriebenen Text eingefügt werden. Die Alternativen mit niedrigerem Gesamtkonfidenzmaß 25.4 können dem Nutzer dann an anderem Ort auf der Anzeigefläche 5 zur Auswahl angezeigt werden. Wählt der Nutzer keine der Alternativen aus, werden diese nach einer voreingestellten Zeit von der Anzeigefläche 5 ausgeblendet. Alternativ können die Alternativen auch dann von der Anzeigefläche 5 ausgeblendet werden, wenn der Nutzer die nächste Eingabe tätigt.

Im Schritt 17 wird nun erkannt, dass keine weitere Eingabe des Nutzers folgt. Das Verfahren wird im Schritt 18 dadurch beendet, dass die Eingabehistorie gelöscht wird.

In Figur 3a und 3b wurde angenommen, dass den erfassten Eingaben des Nutzers von Beginn an die tatsächlich vom Nutzer gemeinten Zeichen das höchste Konfidenzmaß zugeordnet wurde. Vor allem für asiatische Sprache, die oft tausende von unterschiedlichen Schriftzeichen beinhalten, kann diese Annahme nicht getroffen werden.

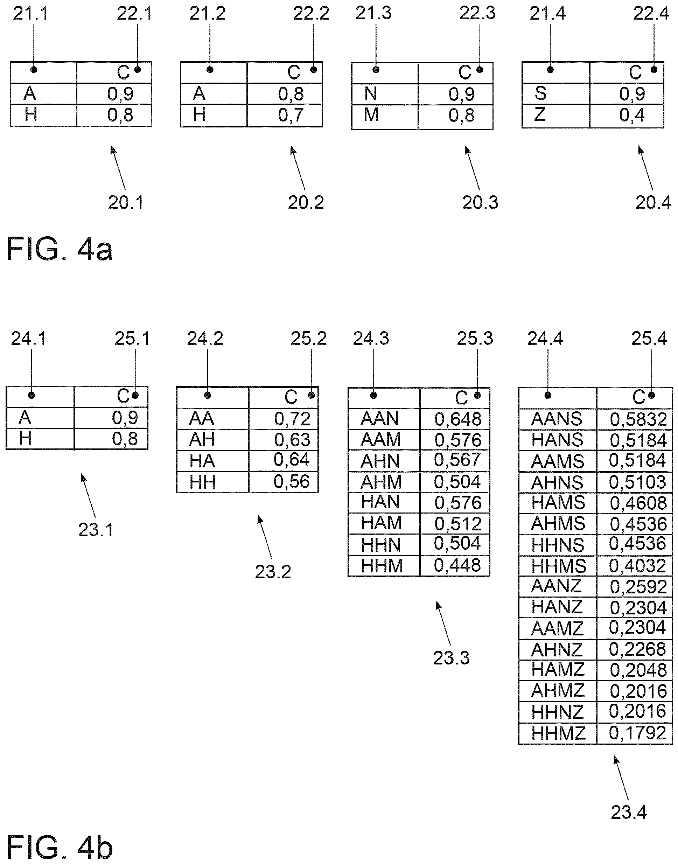

Figur 4a und 4b zeigen daher ein Beispiel für die Berechnung der Gesamtkonfidenzmaße 25.1 bis 25.4, bei der beispielsweise die erste Nutzereingabe nicht dem tatsächlich vom Nutzer gemeinten Zeichen mit höchster Konfidenz zugeordnet wird. Im konkreten Beispiel der Eingabe "H" wird also dem Zeichen "A" ein höheres Konfidenzmaß 22.1 zugeordnet als dem tatsächlich gemeinten Zeichen "H". Die restlichen Zuordnungen der Eingaben bleiben im Vergleich zu Figur 3a und 3b unverändert.

Bei einem klassischen Ansatz der Eingabeerkennung, müsste der Nutzer bereits nach der ersten Eingabe eine Korrektur seiner Eingabe vornehmen, um die von ihm gewünschte Zeichenkette zu erhalten. Mit dem erfindungsgemäßen Verfahren ist es jedoch möglich, dass der Nutzer, obwohl er keine Korrektur vornimmt, das von ihm gewünschte Ergebnis erhält. Dies ist möglich, da alle oder zumindest eine Teilmenge von Eingabekombinationen aus der Liste mit Gesamtkonfidenzmaßen hinzugezogen werden bzw. wird.

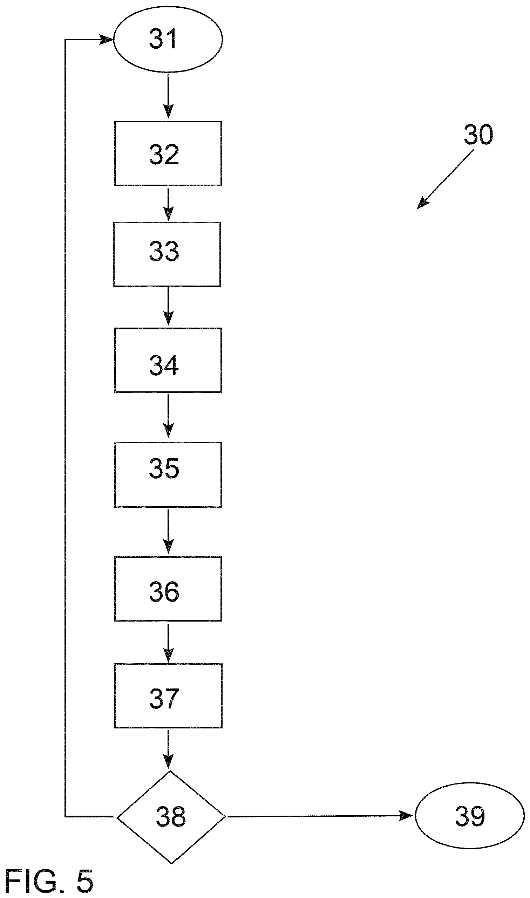

Mit Bezug zu den Figuren 4a, 4b und 5 wird ein weiteres Ausführungsbeispiel des Verfahrens 30 zur Erkennung einer Zeichenkette in Abhängigkeit von den Gesamtkonfidenzmaßen erläutert:
Es wird weiterhin angenommen, dass der Nutzer die Zeichenkette "HANS" eingeben möchte. Die Schritte 31 bis 34 des Verfahrens 30 entsprechen dabei den Schritten 11 bis 14 des Verfahrens 10 aus Figur 2.

Im Schritt 34 werden also wie im Schritt 14 des Verfahrens 10 die Zeichenkombinationen 24.1 bis 24.4 gebildet sowie dazugehörige Gesamtkonfidenzmaße 25.1 bis 25.4 berechnet. Dabei wird die Situation der Figuren 4a und 4b angenommen. Die erste Nutzereingabe "H" wird also nicht mit höchstem Konfidenzmaß dem tatsächlich gemeinten Zeichen "H", sondern dem Zeichen "A" zugeordnet.

Im Schritt 35 werden die Zeichenkombinationen 24.1 bis 24.4 mit in der Datenbank 6 hinterlegten Wörterbucheinträgen 19 verglichen. Ab der dritten Nutzereingabe "N" kann für die Zeichenkombination "AAN", die in der Gesamtkonfidenzliste den höchsten Wert des Gesamtkonfidenzmaßes 24.3 besitzt, kein Wörterbucheintrag 19 mehr gefunden werden.

Im Schritt 36 wird die Zeichenkombination 24.3 mit dem nächsthöchsten Konfidenzmaß ermittelt, für den ein Wörterbucheintrag 19 vorhanden ist. Im konkreten Beispiel ist dies für die Kombination "HAN" mit dem zweithöchsten Konfidenzmaß der Fall. Gleichzeitig wird die Zeichenkombination "AAN" aus der Liste gelöscht. Dies bedeutet, dass die Zeichenkombination "AAN" für weitere Nutzereingaben nicht mehr berücksichtigt wird.

Im Schritt 37 wird dann die Zeichenkombination "HAN" als erste Zeichenkombination zur Auswahl für den Nutzer auf der Anzeigefläche 5 dargestellt. Andere Zeichenkombinationen, für die ebenfalls eine Wörterbucheintrag 19 existiert, die aber ein niedrigeres Konfidenzmaß aufweisen, werden unterhalb der Zeichenkombination "HAN" dargestellt.

Im Schritt 38 wird dann festgestellt, dass der Nutzer eine weitere Eingabe getätigt hat. Für die getätigte Eingabe "S" des Nutzers wird in den Schritten 32 bis 34 analog zu den vorhergehenden Eingaben verfahren.

Im Schritt 35 werden wieder die Zeichenkombinationen 24.4 der vier Nutzereingaben mit in der Datenbank 6 hinterlegten Wörterbucheinträgen verglichen. Da allerdings die Zeichenkombination "AAN" im vorhergehenden Durchlauf des Verfahrens bereits gelöscht wurde, wird die Zeichenkombination "AANS" nicht weiter berücksichtigt.

Im Schritt 36 werden die Zeichenkombination 24.3 mit den nächsthöchsten Gesamtkonfidenzmaßen 25.3 ermittelt, für die ein Wörterbucheintrag 19 vorhanden ist. Im konkreten Beispiel ist dies für die Kombination "HANS" mit dem nun höchsten Gesamtkonfidenzmaß 25.3 der Fall.

Im Schritt 37 wird dann zuerst die Zeichenkombination 24.4 mit höchstem Gesamtkonfidenzmaß 25.4 und einer Entsprechung im Wörterbuch 19 angezeigt, also "HANS". Alle anderen Zeichenkombinationen 24.4 mit niedrigerem Gesamtkonfidenzmaß 25.4 und einer Entsprechung im Wörterbuch 19 werden unterhalb der Zeichenkombination "HANS" dargestellt.

Die Schritte 38 und 39 entsprechen dann wieder den Schritten 17 und 18 des Verfahrens 10.

Dieses Ausführungsbeispiel des Verfahrens hat den Vorteil, dass dem Nutzer nur Zeichenketten ausgegeben werden, die im Wörterbuch eine Entsprechung finden. Einer Ausgabe einer bloßen Aneinanderreihung von Buchstaben wird somit vorgebeugt. Als Folge des Verfahrens 30 ergibt sich vorteilhafterweise, dass die Eingabe automatisch korrigiert wird. Der Nutzer muss also keine manuelle Korrektur durchführen. Es kann daher eine "Rückwärtskorrektur" erreicht werden.

Die Verfahrensschritte der Verfahren 10 und 30 sind beliebig kombinierbar. Insbesondere kann auch im Verfahren 30 ein Schwellenwert des Gesamtkonfidenzmaßes 25.1 bis 25.4 festgelegt werden, wie im Verfahrensschritt 15 des Verfahrens 10 beschrieben ist.

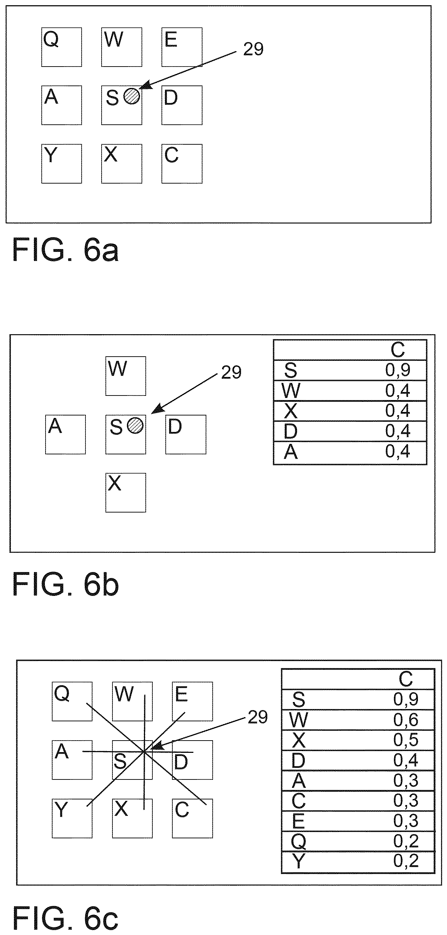

Mit Bezug zu Figur 6a bis 6c wird die Zuordnung der Konfidenzmaße 22.1 bis 22.4 zu Nutzereingaben bei einer Tastaturerfassung erläutert:
Dazu wird dem Nutzer eine Tastatur auf der Eingabevorrichtung 2 angezeigt, die er durch einfaches Berühren der Anzeigefläche 5 komfortabel bedienen kann. Figur 6a zeigt einen Ausschnitt einer Tastatur mit deutscher Tastenanordnung. Dabei wird ein Tastendruck 29 auf der Taste S erfasst.

In Figur 6b wird der Taste, auf der der Tastendruck erfasst worden ist, also der Taste S, das höchste Konfidenzmaß zugeordnet. Den umliegenden Tasten A, W, D und X wird ein niedrigeres, aber für alle Tasten gleiches Konfidenzmaß angenommen. Dieses Verfahren ist vorteilhaft, da es eine kurze Berechnungszeit benötigt.

In Figur 6c wird die tatsächliche Fingerposition bei dem Tastendruck erfasst. Über den Abstand der Mittelpunktskoordinaten der Tasten zur Fingerposition werden die entsprechenden Konfidenzmaße ermittelt. Da der Tastendruck 29 auf der Taste S stattgefunden hat, wird der Taste S auch hier das höchste Konfidenzmaß zugeordnet. Die benachbarte Tasten W weist dabei den geringsten Abstand zur Fingerposition zum Zeitpunkt des Tastendrucks auf. Ihr wird daher das zweithöchste Konfidenzmaß zugeordnet. Die Konfidenzmaße für die anderen umliegenden Tasten wird dann analog ermittelt. Dieses Verfahren der Konfidenzmaßbestimmung ist vorteilhaft, da es eine sehr hohe Genauigkeit aufweist.

Alternativ kann die Nutzereingabe über eine Spracheingabe getätigt werden. Dabei ist die Eingabevorrichtung 2 als Mikrofon ausgebildet. Hier können die Ergebnisse insbesondere uneindeutig sein, weil in dem Fahrzeug ein hoher Störgeräuschpegel herrscht oder der Nutzer undeutlich spricht. Insbesondere kann die Nutzereingabe mehrteilig sein. Der Nutzer kann beispielsweise einzelne Buchstaben, Einzelworte oder Mehrworte einsprechen.

Diese Arten der Eingabeerfassung können beliebig mit den Verfahren 10 und 30 kombiniert werden.

Die Ein- und Ausgabemodalitäten für die Nutzereingabe und die Systemausgabe können ergonomisch an den jeweiligen Anwendungsfall angepasst werden. Insbesondere für den Betrieb in einem Fahrzeug eignet sich bei dem erfindungsgemäßen Verfahren eine Nutzereingabe durch Sprache, wobei aber insbesondere multimodale Eingaben unter Einbeziehung von Gesten und über manuelle Bedienelemente vorteilhaft sind. Sprachschnittstellen eignen sich weniger in sogenannten Ruhezonen, in denen der Geräuschpegel niedrig gehalten werden soll, oder für Nutzer mit Hör- oder Sprechstörungen. In diesem Falle kann das erfindungsgemäße Verfahren weiterhin eingesetzt werden, indem manuelle Nutzereingaben vorgesehen sind. Ebenso kann eine Systemausgabe multimodal an die Gegebenheiten angepasst werden.

### BEZUGSZEICHENLISTE

- 1: Vorrichtung
- 2: Eingabevorrichtung
- 3: Steuervorrichtung
- 4: Anzeigevorrichtung
- 5: Anzeigefläche
- 6: Datenbank
- 7: Datenbankeinträge, Zeichen
- 8: Rechenvorrichtung
- 9: Fahrzeug
- 10: Verfahren
- 11-18: Verfahrensschritte
- 19: Datenbankeinträge, Wörterbuch
- 20.1-20.4: Trefferlisten
- 21.1-21.4: relevante Zeichen
- 22.1-22.4: Konfidenzmaße
- 23.1-23.4: Gesamtkonfidenzlisten
- 24.1-24.4: Zeichenkombinationen
- 25.1-25.4: Gesamtkonfidenzmaße
- 29: Tastendruck
- 30: Verfahren
- 31-39: Verfahrensschritte

## Patentansprüche

1. Verfahren zum Eingeben und Erkennen einer Zeichenkette, bei dem
- mehrere nacheinander eingegebene Nutzereingaben zum Bilden der Zeichenkette erfasst werden,
- eine Konfidenzanalyse durchgeführt wird, bei der jede Nutzereingabe mit mehreren in einer Datenbank (6) gespeicherten Zeichen (7) verglichen wird und relevanten Zeichen (21.1, 21.2, 21.3, 21.4) ein Wert eines Konfidenzmaßes (22.1, 22.2, 22.3, 22.4) zugeordnet wird, der die Übereinstimmung der Nutzereingabe mit diesen relevanten Zeichen (21.1, 21.2, 21.3, 21.4) bewertet,
- Zeichenkombinationen (24.1, 24.2, 24.3, 24.4) aus den den Nutzereingaben zugeordneten Zeichen (21.1, 21.2, 21.3, 21.4) gebildet werden, wobei aus den den relevanten Zeichen (21.1, 21.2, 21.3, 21.4) zugeordneten Konfidenzmaßen (22.1, 22.2, 22.3, 22.4) Gesamtkonfidenzmaße (25.1, 25.2, 25.3, 25.4) für die Zeichenkombinationen (24.1, 24.2, 24.3, 24.4) ermittelt werden und
- eine Teilmenge der Zeichenkombinationen (24.1, 24.2, 24.3, 24.4) in Abhängigkeit von den Gesamtkonfidenzmaßen (25.1, 25.2, 25.3, 25.4) ausgegeben wird,
- die Nutzereingabe durch eine berührungsempfindliche Oberfläche einer Eingabevorrichtung (2) erfasst wird, wobei ein Feld auf der Eingabevorrichtung (2) als Tastatur mit Tasten ausgebildet ist,
**dadurch gekennzeichnet, dass**
- die Nutzereingabe durch einen Tastendruck (29) auf eine Taste der Tastatur erfasst wird, wobei bei dem Tastendruck eine tatsächliche Fingerposition erfasst wird und über den Abstand der Mittelpunktskoordinaten der Tasten zur Fingerposition die entsprechenden Konfidenzmaße (22.1, 22.2, 22.3, 22.4) ermittelt werden, und
- nur die Zeichenkombinationen (24.1, 24.2, 24.3, 24.4) ausgegeben werden, deren Gesamtkonfidenzmaße (25.1, 25.2, 25.3, 25.4) oberhalb eines bestimmten Schwellenwertes liegen, wobei der Schwellenwert in Abhängigkeit von der Anzahl der mehreren Nutzereingaben gewählt wird.

2. Verfahren nach Anspruch 1,
**dadurch gekennzeichnet, dass**
die Gesamtkonfidenzmaße (25.1, 25.2, 25.3, 25.4) der Zeichenkombinationen (24.1, 24.2, 24.3, 24.4) mittels Multiplikation der den relevanten Zeichen (21.1, 21.2, 21.3, 21.4) zugeordneten Konfidenzmaße (22.1, 22.2, 22.3, 22.4) ermittelt wird.

3. Verfahren nach Anspruch 1,
**dadurch gekennzeichnet, dass**
die Gesamtkonfidenzmaße (25.1, 25.2, 25.3, 25.4) der Zeichenkombinationen (24.1, 24.2, 24.3, 24.4) mittels Mittelwertbildung über die den relevanten Zeichen (21.1, 21.2, 21.3, 21.4) zugeordneten Konfidenzmaße (22.1, 22.2, 22.3, 22.4) ermittelt wird.

4. Verfahren nach einem der vorhergehenden Ansprüchen,
**dadurch gekennzeichnet, dass**
- die Teilmenge der Zeichenkombinationen (24.1, 24.2, 24.3, 24.4) absteigend nach der Höhe der Gesamtkonfidenzmaße (25.1, 25.2, 25.3, 25.4) geordnet wird und
- die Zeichenkombination (24.1, 24.2, 24.3, 24.4) mit dem höchsten Gesamtkonfidenzmaß (25.1, 25.2, 25.3, 25.4) als erstes ausgegeben wird.

5. Verfahren nach Anspruch 4,
**dadurch gekennzeichnet, dass**
- die Teilmenge der Zeichenkombinationen (24.1, 24.2, 24.3, 24.4) mit Datenbankeinträgen (19) verglichen wird und,
- wenn für die Zeichenkombination (24.1, 24.2, 24.3, 24.4) mit dem höchsten Gesamtkonfidenzmaß (25.1, 25.2, 25.3, 25.4) kein Datenbankeintrag (19) vorhanden ist, diese Zeichenkombination (24.1, 24.2, 24.3, 24.4) nicht ausgegeben wird und die Zeichenkombination (24.1, 24.2, 24.3, 24.4) mit dem nächsthöheren Gesamtkonfidenzmaß (25.1, 25.2, 25.3, 25.4), für die ein Datenbankeintrag (19) vorhanden ist, als erstes ausgegeben wird.

6. Verfahren nach einem der vorhergehenden Ansprüchen,
**dadurch gekennzeichnet, dass**
die eingegebenen Zeichen mittels Handschrifterfassung, Spracherfassung oder Tastatureingabeerfassung erfasst werden.

7. Vorrichtung (1) zum Eingeben und Erkennen einer Zeichenkette, mit
- einer Eingabevorrichtung (2), die eine berührungsempfindliche Oberfläche umfasst, zum Eingeben und Erfassen von Nutzereingaben, wobei ein Feld auf der Eingabevorrichtung (2) als Tastatur ausgebildet ist,
- einer Steuervorrichtung (3) zur Durchführung einer Konfidenzanalyse, wobei Vergleiche zwischen Nutzereingaben mit mehreren in einer Datenbank (6) gespeicherten Zeichen (7) durchführbar sind und relevanten Zeichen (21.1, 21.2, 21.3, 21.4) ein Wert eines Konfidenzmaßes (22.1, 22.2, 22.3, 22.4) zuordenbar ist, der die Übereinstimmung der Nutzereingabe mit diesen relevanten Zeichen (21.1, 21.2, 21.3, 21.4) bewertet, wobei die Steuervorrichtung (3) dazu ausgebildet ist, Zeichenkombinationen (24.1, 24.2, 24.3, 24.4) aus den relevanten Zeichen (21.1, 21.2, 21.3, 21.4) zu bilden,
- einer Rechenvorrichtung (8), mittels welcher aus den den relevanten Zeichen (21.1, 21.2, 21.3, 21.4) zugeordneten Konfidenzmaßen (22.1, 22.2, 22.3, 22.4) Gesamtkonfidenzmaße (25.1, 25.2, 25.3, 25.4) für die Zeichenkombinationen (24.1, 24.2, 24.3, 24.4) ermittelt werden und
- einer Ausgabevorrichtung (4), mittels welcher eine Teilmenge der Zeichenkombinationen (24.1, 24.2, 24.3, 24.4) in Abhängigkeit von den Gesamtkonfidenzmaßen (25.1, 25.2, 25.3, 25.4) ausgegeben werden, **dadurch gekennzeichnet, dass**
- die Nutzereingabe durch einen Tastendruck (29) auf eine Taste der Tastatur erfasst wird, wobei bei dem Tastendruck eine tatsächliche Fingerposition erfasst wird und über den Abstand der Mittelpunktskoordinaten der Tasten zur Fingerposition die entsprechenden Konfidenzmaße (22.1, 22.2, 22.3, 22.4) ermittelt werden, wobei
- nur die Zeichenkombinationen (24.1, 24.2, 24.3, 24.4) ausgegeben werden, deren Gesamtkonfidenzmaße (25.1, 25.2, 25.3, 25.4) oberhalb eines bestimmten Schwellenwertes liegen, wobei der Schwellenwert in Abhängigkeit von der Anzahl der mehreren Nutzereingaben wählbar ist.

8. Fahrzeug (9) mit einer Vorrichtung (1) zum Eingeben und Erkennen einer Zeichenkette nach Anspruch 7.

## Claims

1. Method for inputting and recognizing a character string, in which
- a plurality of successively-input user inputs for forming the character string are detected,
- a confidence analysis is carried out in which each user input is compared with a plurality of characters (7) stored in a database (6), wherein the relevant characters (21.1, 21.2, 21.3, 21.4) are assigned a confidence rating value (22.1, 22.2, 22.3, 22.4), which represents the matching of the user input with these relevant characters (21.1, 21.2, 21.3, 21.4),
- character combinations (24.1, 24.2, 24.3, 24.4) are formed from the characters (21.1, 21.2, 21.3, 21.4) assigned to the user inputs, wherein the total confidence rating values (25.1, 25.2, 25.3, 25.4) for the character combinations (24.1, 24.2, 24.3, 24.4) are determined from the confidence rating values (22.1, 22.2, 22.3, 22.4) assigned to the relevant characters (21.1, 21.2, 21.3, 21.4),
- a subset of the character combinations (24.1, 24.2, 24.3, 24.4) is output as a function of the total confidence rating values (25.1, 25.2, 25.3, 25.4),
- the user input is detected by a touch-sensitive surface of an input device (2), wherein a field is formed on the input device (2) in the form of a keyboard with keys,
**characterized in that**
- the user input is detected by a keystroke (29) on a key of the keyboard, wherein an actual finger position is detected as a result of the keystroke and the corresponding confidence rating values (22.1, 22.2, 22.3, 22.4) are determined as a function of the distance between the center-point coordinates of the keys and the finger position, and
- only the character combinations (24.1, 24.2, 24.3, 24.4) whose total confidence rating values (25.1, 25.2, 25.3, 25.4) lie above a certain threshold value are output, wherein the threshold value is chosen as a function of the number of multiple user inputs.

2. Method according to claim 1, **characterized in that** the total confidence rating value (25.1, 25.2, 25.3, 25.4) of the character combinations (24.1, 24.2, 24.3, 24.4) is determined by multiplying the confidence rating value (22.1, 22.2, 22.3, 22.4) assigned to the relevant characters (21.1, 21.2, 21.3, 21.4).

3. Method according to claim 1, **characterized in that** the total confidence rating value (25.1, 25.2, 25.3, 25.4) of the character combinations (24.1, 24.2, 24.3, 24.4) is determined by averaging the confidence rating value (22.1, 22.2, 22.3, 22.4) assigned to the relevant characters (21.1, 21.2, 21.3, 21.4).

4. Method according to any one of the preceding claims, **characterized in that**
- the subset of character combinations (24.1, 24.2, 24.3, 24.4) is arranged in descending order according to the height of the total confidence rating value (25.1, 25.2, 25.3, 25.4), and
- the character combination (24.1, 24.2, 24.3, 24.4) with the highest total confidence rating value (25.1, 25.2, 25.3, 25.4) is output first.

5. Method according to claim 4, **characterized in that**
- the subset of the character combinations (24.1, 24.2, 24.3, 24.4) is compared with database records (19), and
- if there is no database record (19) for the character combination (24.1, 24.2, 24.3, 24.4) with the highest total confidence rating value (25.1, 25.2, 25.3, 25.4), then this character combination (24.1, 24.2, 24.3, 24.4) is not output, but the character combination (24.1, 24.2, 24.3, 24.4) with the next highest total confidence rating value (25.1, 25.2, 25.3, 25.4) for which there is a database record (19), is output first.

6. Method according to any one of the preceding claims, **characterized in that** the input characters are detected by means of handwriting acquisition, speech acquisition or keyboard input.

7. Device (1) for inputting and recognizing a character string, with
- an input device (2) comprising a touch-sensitive surface for inputting and detecting user inputs, wherein a field is formed on the input device (2) in the form of a keyboard,
- a control device (3) for performing a confidence analysis, wherein comparisons between the user input and a plurality of characters (7) stored in a database (6) are carried out, and the relevant characters (21.1, 21.2, 21.3, 21.4) are assigned a confidence rating value (22.1, 22.2, 22.3, 22.4), wherein the matching of the user input with these relevant characters (21.1, 21.2, 21.3, 21.4) is evaluated by the control device (3) to form the character combinations (24.1, 24.2, 24.3, 24.4) from the relevant characters (21.1, 21.2, 21.3, 21.4),
- a computing device (8), by means of which the total confidence rating values (25.1, 25.2, 25.3, 25.4) for the character combinations (24.1, 24.2, 24.3, 24.4) are determined from the confidence rating values (22.1, 22.2, 22.3, 22.4) assigned to the relevant characters (21.1, 21.2, 21.3, 21.4), and
- an output device (4), by means of which a subset of the character combinations (24.1, 24.2, 24.3, 24.4) is output as a function of the total confidence rating value (25.1, 25.2, 25.3, 25.4),
**characterized in that**
- the user input is detected upon a key (29) on a key of the keyboard being pressed,
- wherein an actual finger position is detected by the keystroke, and the distance between the center-point coordinates of the keys to the finger position determines the corresponding confidence rating value (22.1, 22.2, 22.3, 22.4),
- wherein only the character combinations (24.1, 24.2, 24.3, 24.4) whose total confidence rating values (25.1, 25.2, 25.3, 25.4) are above a certain threshold, are output, wherein the threshold may be selected as a function of the number of multiple user inputs.

8. Vehicle (9) with a device (1) for inputting and recognizing a character string according to claim 7.

## Revendications

1. Procédé de saisie et de reconnaissance d'une chaîne de caractères, dans lequel
- plusieurs entrées utilisateurs saisies successivement pour la formation de la chaîne de caractères sont détectées,
- une analyse de confiance est effectuée, dans laquelle chaque entrée utilisateur est comparée avec plusieurs caractères (7) enregistrés dans une base de données (6) et, aux caractères pertinents (21.1, 21.2, 21.3, 21.4), est attribué une valeur de niveau de confiance (22.1, 22.2, 22.3, 22.4), qui évalue la coïncidence de l'entrée utilisateur avec ces caractères pertinents (21.1, 21.2, 21.3, 21.4),
- des combinaisons de caractères (24.1, 24.2, 24.3, 24.4) sont formées à partir des caractères (21.1, 21.2, 21.3, 21.4) attribués aux entrées utilisateurs, moyennant quoi, à partir des niveaux de confiance (22.1, 22.2, 22.3, 22.4) attribuée aux caractères pertinents (21.1, 21.2, 21.3, 21.4), des niveaux de confiance totaux (25.1, 25.2, 25.3, 25.4) sont déterminés pour les combinaisons de caractères (24.1, 24.2, 24.3, 24.4) et
- une quantité partielle des combinaisons de caractères (24.1, 24.2, 24.3, 24.4) est sortie en fonction des niveaux de confiance totaux (25.1, 25.2, 25.3, 25.4),
- l'entrée utilisateur est détectée par l'intermédiaire d'une surface tactile d'un dispositif de saisie (2), un champ sur le dispositif de saisie (2) étant conçu comme un clavier avec des touches,
**caractérisé en ce que**
- l'entrée utilisateur est détectée par une pression (29) sur une touche du clavier, moyennant quoi, lors de la pression sur la touche, une position actuelle des doigts est détectée et, grâce à la distance entre les coordonnées du point central des touches et la position des doigts, les niveaux de confiance (22.1, 22.2, 22.3, 22.4) correspondants sont déterminés et
- seules les combinaisons de caractères (24.1, 24.2, 24.3, 24.4) dont les niveaux de confiance totaux (25.1, 25.2, 25.3, 25.4) se trouvent au-dessus d'une valeur seuil déterminée sont sorties, la valeur seuil étant choisie en fonction du nombre des plusieurs entrées utilisateurs.

2. Procédé selon la revendication 1,
**caractérisé en ce que**
les niveaux de confiance totaux (25.1, 25.2, 25.3, 25.4) des combinaisons de caractères (24.1, 24.2, 24.3, 24.4) sont déterminés par la multiplication des niveaux de confiance (22.1, 22.2, 22.3, 22.4) attribués aux caractères pertinents (21.1, 21.2, 21.3, 21.4).

3. Procédé selon la revendication 1,
**caractérisé en ce que**
les niveaux de confiances totaux (25.1, 25.2, 25.3, 25.4) des combinaisons de caractères (24.1, 24.2, 24.3, 24.4) sont déterminés grâce à la forme d'une valeur moyenne des niveaux de confiance (22.1, 22.2, 22.3, 22.4) attribués aux caractères pertinents (21.1, 21.2, 21.3, 21.4).

4. Procédé selon l'une des revendications précédentes,
**caractérisé en ce que**
- la quantité partielle des combinaisons de caractères (24.1, 24.2, 24.3, 24.4) est ordonnées de manière décroissante selon la valeur des niveaux de confiance totaux (25.1, 25.2, 25.3, 25.4) et
- la combinaison de caractères (24.1, 24.2, 24.3, 24.4) avec le niveau de confiance total (25.1, 25.2, 25.3, 25.4) le plus élevé est sortie en premier.

5. Procédé selon la revendication 4,
**caractérisé en ce que**
- la quantité partielle des combinaisons de caractères (24.1, 24.2, 24.3, 24.4) est comparée avec des entrées de bases de données (19) et
- lorsque, pour la combinaison de caractères (24.1, 24.2, 24.3, 24.4) avec le niveau de confiance total (25.1, 25.2, 25.3, 25.4) le plus élevé, aucune entrée de base de données (19) n'existe, cette combinaison de caractères (24.1, 24.2, 24.3, 24.4) n'est pas sortie et la combinaison de caractères (24.1, 24.2, 24.3, 24.4) est avec le avec le niveau de confiance total (25.1, 25.2, 25.3, 25.4) le plus élevé suivant pour lequel une entrée de base de données (19) existe, est sortie en premier.

6. Procédé selon l'une des revendications précédentes,
**caractérisé en ce que**
les caractères saisis sont détectés à l'aide d'une détection d'écriture manuelle, d'une saisie vocale ou d'une détection d'entrée au clavier.

7. Dispositif (1) pour la saisie et la reconnaissance d'une chaîne de caractères avec
- un dispositif de saisie (2) qui comprend une surface tactile, pour la saisie et la détection d'entrées utilisateurs, un champ du dispositif de saisie (2) étant conçu comme un clavier,
- un dispositif de commande (3) pour la réalisation d'une analyse de confiance, des comparaisons entre les entrées utilisateurs avec plusieurs caractères (7) enregistrés dans une base de données (6) pouvant être effectuées et, aux caractères pertinents (21.1, 21.2, 21.3, 21.4), une valeur de niveau de confiance (22.1, 22.2, 22.3, 22.4) pouvant être attribuée, qui évalue la coïncidence de l'entrée utilisateur avec ces caractères pertinents (21.1, 21.2, 21.3, 21.4), le dispositif de commande (3) étant conçu pour former des combinaisons de caractères (24.1, 24.2, 24.3, 24.4) à partir des caractères pertinents (21.1, 21.2, 21.3, 21.4),
- un dispositif de calcul (8) au moyen duquel, à partir des niveaux de confiance (22.1, 22.2, 22.3, 22.4) attribués aux caractères pertinents (21.1, 21.2, 21.3, 21.4), des niveaux de confiance totaux (25.1, 25.2, 25.3, 25.4) sont déterminés pour les combinaisons de caractères (24.1, 24.2, 24.3, 24.4) et
- un dispositif de sortie (4) au moyen duquel une quantité partielle des combinaisons de caractères (24.1, 24.2, 24.3, 24.4) est sortie en fonction des niveaux de confiance totaux (25.1, 25.2, 25.3, 25.4),
**caractérisé en ce que**
- l'entrée utilisateur est détectée par une pression (29) sur une touche du clavier, moyennant quoi, lors d'une pression sur la touche, une position réelle des doigts est détectée et, grâce à la distance entre les coordonnées du centre des touches et la position des doigts, les niveaux de confiance (22.1, 22.2, 22.3, 22.4) correspondants sont déterminés,
- seules les combinaisons (24.1, 24.2, 24.3, 24.4) dont les niveaux de confiance totaux (25.1, 25.2, 25.3, 25.4) se trouvent au-dessus d'une valeur seuil déterminée, sont sorties, la valeur seuil pouvant être choisie en fonction du nombre des plusieurs entrées utilisateurs.

8. Véhicule (9) avec un dispositif (1) pour la saisie et la reconnaissance d'une chaîne de caractères selon la revendication 7.
